(19) Europäisches Patentamt
European Patent Office
Office européen des brevets

(11) **EP 2 124 038 A1**

(12) **EUROPEAN PATENT APPLICATION**
published in accordance with Art. 153(4) EPC

(43) Date of publication:
**25.11.2009 Bulletin 2009/48**

(51) Int Cl.:
**G01N 21/27** *(2006.01)*     **G01N 21/01** *(2006.01)*

(21) Application number: **08710415.4**

(22) Date of filing: **19.02.2008**

(86) International application number:
**PCT/JP2008/000262**

(87) International publication number:
**WO 2008/105146 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.02.2007 JP 2007049279**

(71) Applicant: **Suntory Holdings Limited**
**Kita-ku, Osaka-shi**
**Osaka 530-8203 (JP)**

(72) Inventors:
• **NAKAHARA, Koichi**
  **Kanagawa 211-0067 (JP)**

• **OGATA, Tateaki**
  **Yamagara 992-0026 (JP)**
• **ITO, Tomohiro**
  **Yamagata 992-0025 (JP)**

(74) Representative: **Piésold, Alexander James**
**Frank B. Dehn & Co.**
**St Bride's House**
**10 Salisbury Square**
**London**
**EC4Y 8JD (GB)**

(54) **LIQUID IMMERSION TYPE ABSORBANCE SENSOR ELEMENT AND ABSORPTION SPECTROMETER USING SAME**

(57)     An absorptiometer is provided which can be used in a state where it is immersed in a liquid to be measured without using an absorbance-measuring cell, and which is insusceptible to disturbance light. The absorptiometer is constructed of a sensor unit (10) directly put into the liquid to be measured, a body unit (20), and wirings (31, 32). The censor unit (10) includes a housing (14), and a LED light source (11) and a photodiode (12) are attached in an opposing manner to this housing (14), with a predetermined length L provided at the distance between the tips of the LED light source (11) and the photodiode (12). The distance L therebetween corresponds to the thickness of the cell in a conventional absorptiometer. A drive current including an alternating current component of a predetermined frequency is input to the LED light source (11), and the output of the photodiode (12) is, after amplified by an amplifier (13), subjected to extraction therefrom of a frequency component in synchronization with the above predetermined frequency, and the absorbance of the liquid to be measured is determined based on the output of this phase detection circuit.

Fig. 1

## Description

### Technical Field

The present invention relates to a liquid immersion type absorbance sensor device and an absorptiometer using the same, and more particularly, to a liquid immersion type absorbance sensor device which, without the use of an absorbance-measuring cell, can be used in a state where it is immersed in a liquid to be measured, and which is further insusceptible to disturbance light, and to an absorptiometer using the same.

### Background Art

Conventional absorptiometers use, for example, a halogen lamp as their light source. Because this halogen lamp emits light in the full range of wavelengths of visible light, it is necessary to employ an optical filter, diffraction grating, optical slit, and so on to take out light in the necessary wavelength region. In addition, an optical system such as an aperture and shutter is also needed to irradiate a sample with the light of the wavelength taken out. Furthermore, a power source for driving the halogen lamp and so on are also needed, resulting in a large-sized apparatus as a whole unsuited for convenient absorbance measurement.

To solve this problem, there are proposed various absorptiometers that use a light-emitting diode (LED) as the light source (patent documents 1 to 6; non-patent document 1). The use of an LED as the light source eliminates the need for the optical filter, diffraction grating, aperture, shutter, and so on, and thus makes it possible to reduce the size of absorptiometers as compared with conventional absorptiometers.

However, if an absorptiometer is thus downsized by the use of an LED, a measuring cell or tube for stabilizing the optical path length in a measurement target sample must still be used, resulting in not much difference from the conventional absorptiometer from the viewpoint of convenience. Accordingly, an absorptiometer capable of measuring absorbance more conveniently has been awaited. Additionally, the use of an LED as the light source is accompanied with the inconvenience of the absorbance being determinable only for one wavelength.

Patent document 1: Japanese Laid-Open Patent Application Publication No. H9-264845
Patent document 2: Japanese Laid-Open Patent Application Publication No. H9-264846
Patent document 3: Japanese Laid-Open Patent Application Publication No. H9-264847
Patent document 4: Japanese Laid-Open Patent Application Publication No. H11-37929
Patent document 5: Japanese Laid-Open Patent Application Publication No. H11-37930
Patent document 6: Japanese Laid-Open Patent Application Publication No. H11-37931
Non-patent document 1: BUNSEKI KAGAKU, volume 54, No. 4, pp 291-295 (2005)

### Disclosure of the Invention

### Problem to be Solved by the Invention

The present invention has been made to solve the above problems of the prior art, and an object of the present invention is to provide an absorbance sensor device which, without the use of an absorbance-measuring cell and so on, can be used in a state where it is directly put into a liquid to be measured, and provide an absorptiometer employing the same. It is also an object of the present invention to provide an absorbance sensor device insusceptible to disturbance light and provide an absorptiometer employing the same.

### Means to Solve the Problem

An absorbance sensor device of the present invention is used in a state where the device is immersed in a liquid to be measured, and comprises: a housing; at least one light source unit having a light-emitting surface which emits a measurement light including light of an absorption wavelength of the liquid to be measured, the light-emitting surface being fixed to the housing; and at least one light detector having a light-receiving surface fixed to the housing at a predetermined distance from the light-emitting surface of the light source unit, which light detector receives by the light-receiving surface the measurement light that has passed through the liquid to be measured and outputs a signal indicative of its intensity.

With this absorbance sensor device, since it can be used in a state where it is immersed in the liquid to be measured with a predetermined distance maintained between the light-emitting surface of the light source unit and the light-receiving surface of the light detector, both fixed to the housing, it is possible to make convenient measurements of absorbance of liquids to be measured without using an absorbance-measuring cell. Additionally, if constructed with plural light source units and plural light detectors, by using light source units that emit lights of different wavelengths, it is possible to make simultaneous measurements of absorbance with measurement lights of different wavelengths.

Additionally, a construction may be employed in which the light source unit comprises a light source of an LED and the light-emitting surface is at a tip end portion of the LED, or a construction may be employed in which the light source unit comprises a light source of an LED and an optical fiber, and the light-emitting surface is at a tip end of the optical fiber. If the light source unit is constructed of an LED, the light-emitting surface is at the tip end portion of the LED. The use of an LED allows a reduction in the weight of the absorbance sensor device. If the light source unit is constructed of a light source of an LED and an optical fiber, the light-emitting surface is at a tip of the optical fiber. Through a change to the length, etc. of the optical fiber, the LED can be disposed at an arbitrary position.

Additionally, in the above, a construction may be employed which includes a plurality of such light source units and one such light detector, and in which the light source units have plural light sources respectively emitting measurement lights of different wavelengths, and optical fibers which allow the measurement lights from the plural light sources to converge on one light-emitting surface on the housing; and the light detector has a light-receiving surface fixed to the housing at a predetermined distance from the light-emitting surface, the light detector receiving by the light-receiving surface the measurement lights that have passed through the liquid to be measured and outputting a signal indicative of their intensities.

With this construction, if the light source unit that emits measurement light is selected in accordance with the absorption wavelength of the liquid to be measured, measurement of light absorbance can be made with one absorbance sensor device, with the absorption wavelength changed for each liquid to be measured.

Here, as the light detector, a photodiode or phototransistor which detects light of an absorption wavelength of the liquid to be measured may be used. Where a photodiode or phototransistor is used as the light detector, the light-receiving surface is at a tip end portion of the photodiode or phototransistor. The use of a photodiode or phototransistor enables a reduction in the weight of the absorption sensor device. Especially where a phototransistor is used, an operational amplifier, which is required when using a photodiode, may be dispensed with, thereby accomplishing a further reduction in the size and weight of the absorption sensor device.

Additionally, if the light detector is constructed of a photodiode or phototransistor and an optical fiber, the light-receiving surface is at the tip end of the optical fiber. By making a change to the length, etc. of the optical fiber, the photodiode or phototransistor can be disposed at an arbitrary position.

It is preferable that a distance between the light-emitting surface and the light-receiving surface is changeable in accordance with the absorbance of the liquid to be measured. In other words, an easy adjustment of the detection sensitivity can be done by making small the distance between the light-emitting surface and the light-receiving surface in the case of a liquid to be measured having a large absorbance, and making large the distance between the light-emitting surface and the light-receiving surface in the case of a liquid to be measured having a small absorbance.

Preferably, the light source unit is replaceable in accordance with the absorption wavelength of the liquid to be measured. Likewise, preferably, the photodiode or phototransistor is replaceable in accordance with the absorption wavelength of the liquid to be measured. This makes it possible to measure absorbances of various liquids to be measured having different absorption wavelengths.

Furthermore, the housing may further include a light-blocking unit which covers the light source unit and the light detector. By the provision of the light-blocking unit, it becomes possible to lessen the influences of disturbance light and increase the accuracy of measurement of absorbance. Especially in the case of an absorptiometer not including a later-described lock-in amplifier and so on, nor a Fourier transformation function, which is susceptible to disturbance light, it is important to provide a light-blocking unit unless used in a dark place.

An absorptiometer of the present invention includes any one of the above absorbance sensor devices and a body unit which performs signal processing on an output from the absorbance sensor device.

The above absorptiometer needs to be used in a dark place, but an absorptiometer of the present invention can be constructed to be usable in a well-lighted place with disturbance light such as from illumination. In other words, in the absorptiometer of the present invention, the body unit further includes a drive circuit which supplies to the light source unit a drive current including an alternating current component of a predetermined frequency and a phase detection circuit which extracts from an output signal of the light detector a frequency component in synchronization with the above predetermined frequency and outputs the same. Absorbance of the liquid to be measured is determined based on the output of the phase detection circuit.

Thus, with the construction including a drive circuit of a so-called lock-in amplifier and a phase detection circuit, the influences of disturbance light may be avoided, thereby allowing measurements of absorbance even in a well-lighted place.

An absorptiometer with the above plural light source units may be constructed to make simultaneous measurements of absorbance for a plurality of wavelengths. In other words, in the absorptiometer of the present invention, the plural light source units are respectively supplied with drive currents including different frequency alternating current components, and an output signal of the light detector is Fourier transformed to simultaneously determine the absorbance for each of the different wavelengths of the measurement lights from the plural light source units.

Thus, with the construction in which Fourier transformation of an output signal is performed, it is possible to make simultaneous measurements of absorbance for a plurality of wavelengths.

Furthermore, with an absorptiometer having a light source unit constructed of a light source and an optical fiber, it is possible to locate the light source in the body unit such that the measurement light is guided to the light-emitting surface via the optical fiber. This leads to a reduction in the size and weight of the absorbance sensor device.

Additionally, where the light detector is constructed of a photodiode or phototransistor and an optical fiber, it is possible to locate the photodiode or phototransistor in the body unit such that the measurement light from the light-receiving surface is guided to the photodiode or phototransistor via the optical fiber. This leads to a reduction in the size and weight of the absorbance sensor device.

## Effect of the Invention

As is apparent from the above explanation, with an absorbance sensor device of the present invention, because the light source unit and the light detector can be directly immersed in a liquid to be measured, it stands in no need of a cell and so on. For this reason, the absorbance sensor device enables convenient and quick measurements of absorbance such as by, for example, directly put into the reaction liquid in a reaction container and can be incorporated in a production line. Furthermore, since the absorbance sensor device enables continuous measurement of absorbance, it is possible to perform, for example, reaction tracking.

Additionally, with the absorptiometer of the construction which incorporates a so-called lock-in amplifier and so on, in which a drive current containing an alternating current component of a predetermined frequency is supplied to the light source unit and a frequency component in synchronization with the above predetermined frequency is output from the detected luminous intensity at the light detector, since disturbance light has little effect if it has entered the light detector, it is possible to determine the absorbance based only on the measurement light from the light source unit. Accordingly, an advantageous effect is obtained in that a convenient, stable, and highly accurate absorbance measurement can be continuously performed even in a well-light place.

Furthermore, with the absorptiometer including a plurality of light source units and one light detector, by adding a Fourier transformation function thereto, it is possible to make simultaneous measurements of absorbance for a plurality of wavelengths.

## Brief Description of the Drawings

Fig. 1 is a view showing the schematic construction of an absorptiometer according to one embodiment of the present invention.

Fig. 2 is a detailed view representing the circuit of the absorptiometer of Fig. 1.

Fig. 3 is a view representing a calibration line obtained for a sample liquid of copper sulfate using the absorptiometer of Fig. 1.

Fig. 4 is a view representing a calibration line prepared in the same manner as Fig. 3 using a commercially available conventional absorptiometer.

Fig. 5 is a view representing a calibration line of polyphenol obtained for a chlorogenic acid sample liquid treated by the Folin-Ciocalteu method, using the absorptiometer of Fig. 1.

Fig. 6 is a view representing a calibration line prepared in the same manner as Fig. 5 using a commercially available conventional absorptiometer.

Fig. 7 is a view showing the schematic construction of an absorbance sensor device according to another embodiment of the present invention, which has a light-blocking unit provided on the housing 14 of the absorptiometer of Fig. 1.

Fig. 8 is a view showing the schematic construction of an absorptiometer according to another embodiment of the present invention, which is capable of measuring absorbance for measurement lights of plural frequencies.

Fig. 9 is a view showing an example of the data obtained by the absorptiometer of Fig. 8.

## Description of Reference Numerals

| 10 | Absorbance sensor device |
|----|--------------------------|
| 11 | LED |
| 12 | Photodiode |

| 13 | Amplifier |
| 14 | Housing |
| 15 | Light-blocking unit |
| 16 | Support |
| 20 | Body unit |
| 21 | Oscillation circuit |
| 22 | Buffer amplifier |
| 23 | Band-pass filter |
| 24 | Phase shifter |
| 25 | Detector circuit |
| 26 | Low-pass filter |
| 27 | Display |
| 31, 32 | Wiring |
| 40 | Sample container |
| 41 | Measurement target liquid |
| 51a, 51b, 51c | LED |
| 51a, 52b, 52c | Optical fiber |
| 53 | Light-emitting surface |
| 12a | Light-receiving surface |
| 56 | Personal computer |
| 54 | D/A converter |
| 55 | A/D converter |

**Best Mode for Carrying Out the Invention**

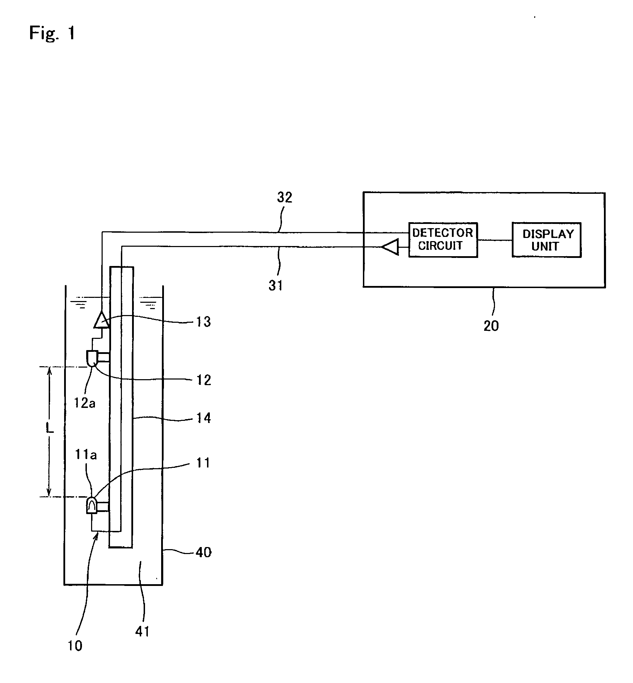

Concrete constructions of embodiments of absorptiometers of the present invention will be described with reference to the drawings. Fig. 1 is a block diagram illustrating the schematic construction of an absorptiometer according to one embodiment of the present invention. The absorptiometer of the present embodiment, as shown in the figure, includes an absorbance sensor device 10, a body unit 20, and wirings 31, 32 of flexible cord which provide connection between these. The absorbance sensor device 10 is used in a state where the device 10 is immersed in a liquid to be measured 41 in a sample container 40.

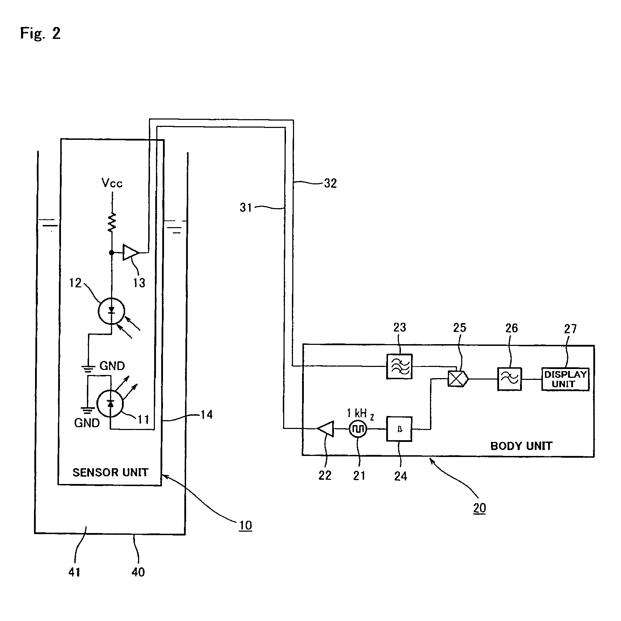

Fig. 2 is a detailed view illustrating the circuit of the absorptiometer of Fig. 1. As shown in Figs. 1 and 2, the absorbance sensor device 10 has a housing 14, which has an LED (light-emitting diode) 11 as a light source and a photodiode 12 as a light detector, both attached thereto, with a power source Vcc connected to the photodiode 12. Additionally, an amplifier 13 for amplifying the output of the photodiode 12 is connected between the photodiode 12 and the power source Vcc. The output from the amplifier 13 is input into a later-described band-pass filter 23 via the wiring 32.

The LED 11 and the photodiode 12 are disposed opposite to each other on the housing 14 and are fixed such that the optical axis of the LED 11 and the optical axis of the photodiode 12 coincide. In the present embodiment, the tip end portion of the LED 11 is the light-emitting surface 11a, and the tip end portion of the photodiode 12 is the light-receiving surface 12a. The distance between the light-emitting surface 11a and the light-receiving surface 12a is fixed at a predetermined length L. This distance L corresponds to the thickness of a cell in a conventional absorptiometer. The setting in the present embodiment is L = 1 cm.

By fixing the LED 11 and the photodiode 12 on the housing 14 in this manner, it becomes possible to always maintain a constant distance L between the light-emitting surface 11a and the light-receiving surface 12a even when the absorbance sensor device 10 is directly put into the liquid to be measured in the sample container 40, thus making possible the same measurement of absorbance as with a conventional absorptiometer with a cell of a predetermined length L.

As the LED 11, the one is selected which emits light of an absorption wavelength of the liquid to be measured. For example, where the liquid to be measured is a later-described copper sulfate solution or color-developing solution by the Folin-Ciocalteu method, an LED of Gap/Gap having a peak emission wavelength near 700 nm is employed. As shown in Fig. 2, the cathode of the LED 11 is grounded (GND), and a rectangular wave of 1 kHz is input from a buffer amplifier 22 via the wiring 31 into the anode of the LED 11, as described later.

The photodiode 12 is capable of detecting the emission wavelength of the LED 11, in other words, the light in a region of wavelengths including the absorption wavelength of the liquid to be measured. In the case of the above copper sulfate solution or Folin-Ciocalteu color-developing solution, the photodiode 12 needs to be able to detect the light of 700 nm. As shown in Fig. 2, the cathode of the photodiode 12 is grounded (GND), and the anode of the photodiode 12 is connected to the power source Vcc. Additionally, the anode of the photodiode 12 is connected to the amplifier 13 for amplifying the output of the photodiode 12. Please note that the amplifier 13 may be located in the body unit 20.

In the present embodiment, since the absorbance sensor device 10 is used in a state where it is directly put into the liquid to be measured 41, the LED 11, photodiode 12, and amplifier 13 of the absorbance sensor device 10, and the wirings among them are made waterproof/liquidproof so as to resist the water or organic solvent contained in the liquid to be measured.

The body unit 20 is provided with an oscillation circuit 21 for generating an alternating current component of a predetermined frequency. This oscillation circuit 21 outputs a rectangular wave having an oscillation frequency of 1 kHz and generates an alternating current component having a peak voltage of 0V- 5V. The voltage oscillation signal from the oscillation circuit 21 is input into the buffer amplifier 22 and converted into a current signal, and then, after passing a current-limiting resistor (not shown), supplied as a drive current including an alternating current component having a frequency of 1 kHz to the LED 11 via the wiring 31. In the present embodiment, the oscillation circuit 21 and the buffer amplifier 22 function as a drive circuit. This allows the LED 11 to blink on and off at a frequency of 1 kHz. Additionally, the output of the oscillation circuit 21 is also input into a later-described phase shifter 24.

The measurement light from the LED 11, which is caused to blink at a frequency of 1 kHz by the drive current from the buffer amplifier 22, reaches the photodiode 12 after partially absorbed by the liquid to be measured present at the portion of the distance L between the light-emitting surface 11a of the LED 11 and the light-receiving surface 12a of the photodiode 12. Here, if there exists any disturbance light other than the measurement light from the LED 11, which arises from room illumination or sunlight, the photodiode 12 also detects the same as well. Accordingly, the output signal from the photodiode 12 may contain noise resulting from the disturbance light. The output signal from the photodiode 12 is, after amplified by the amplifier 13, input into the band-pass filter 23 of the body unit 20 via the wiring 32.

The band-pass filter 23 is a filter having a center frequency of 1 kHz and passing a relatively wideband (Q = 3) component only. The signal that has passed this band-pass filter 23 becomes only a component having a frequency of approximately 1 kHz and is further multiplied at a detector circuit 25 by a reference signal which is input therein from the oscillation circuit 21 via the phase shifter 24, and finally is synchronously demodulated by a low-pass filter circuit 26. In the present embodiment, the band-pass filter 23, detector circuit 25, and low-pass filter circuit 26 function as a phase detection circuit. The phase shifter 24 performs the function of equalizing the phase of the reference signal and the phase of the detected signal. The above enables the absorptiometer of the present embodiment to extract a component having a frequency of 1 kHz from the measured signal and output the same, while removing a signal resulting from disturbance light.

Additionally, the absorptiometer of the present embodiment also has an amplifier circuit built into the low-pass filter circuit 26 and is constructed so as to display the amplified signal on a display 27. Furthermore, although not shown, in the absorptiometer of the present embodiment, an operational means is provided before or after the low-pass filter circuit 26, which works out the absorbance and its secondary information in accordance with the type of analysis such as coloration, discoloration, colorimetric, sedimentation, suspension, and turbidimetry. This provides for an easy obtainment of desired analysis data.

One or both of the LED 11 and the photodiode 12 may be constructed to be movable on the housing 14 so that the above-mentioned distance L between the light-emitting surface 11a of the LED 11 and the light-receiving surface 12a of the photodiode 12 can be changed as needed. In addition, absorptiometers having different types of LEDs 11 and photodiodes 12 and different distances L may be provided in advance so that they are replaceable in accordance with the type and concentration of the liquid to be measured.

The method of use and operation of the thus constructed absorptiometer of the present embodiment will be described. First, in order to determine the incident light intensity $I_0$, a blank solution is provided. The blank solution is the one in which the target component for measurement has been removed from a target sample solution to be actually measured, and water or extraction solvent becomes the blank solution. The body unit 20 is powered on, with the absorbance sensor device 10 immersed in the blank solution. This allows the measurement light to be emitted from the LED 11 towards the photodiode 12. A measurement is made in this state to determine the incident light intensity $I_0$. This incident light intensity $I_0$ is stored in the above operational means. Next, a liquid to be measured is put into a container of enough size to accommodate the absorbance sensor device 10. Here, where a measurement is conducted in, for example, a large-sized reaction tank inside a plant, the absorbance sensor device 10 may directly be put into the reaction tank, thereby dispensing with the provision of the above container. Then, the absorbance sensor device 10 is directly put into the measurement sample solution, followed by powering on the body unit 20. This allows the measuring light to be irradiated from the LED 11 towards the photodiode 12, enabling a continuous measurement of absorbance. Since the absorptiometer of the present embodiment includes a lock-in amplifier, the turning out of illumination or light-blocking is not needed.

During measurement, of the signal detected at the photodiode 12, only the component having a frequency of 1 kHz passes the band-pass filter 23, and only the signal in synchronization with a reference signal, which is the signal having a frequency of 1 kHz, is detected by the detector circuit 25. Accordingly, as mentioned above, an ambient light component such as from sunlight or fluorescent light is removed due to the difference in frequency, or is negligible, if present, it being very small in amount. Thus, the transmitted light intensity I is determined based only on the measurement light transmitted through the liquid to be measured. This transmitted light intensity I is stored in the above operational means.

Next, the incident light intensity $I_0$ and the transmitted light intensity I are used in the operational means to determine the absorbance A from the following equation.

$$A = \log_{10}(I_0 /I) \hspace{4cm} \text{Equation (1)}$$

On the other hand, the absorbance A has the following relationship between it and the distance L between the LED 11 and the photodiode 12, the absorption coefficient e of the dissolved substance in the liquid to be measured, and the concentration C of the dissolved substance in the liquid to be measured.

$$A = e L C \hspace{4cm} \text{Equation (2)}$$

Therefore, if the absorption coefficient e of the dissolved substance in the liquid to be measured is known, the concentration C of the dissolved substance of the liquid to be measured can be determined from the equations 1 and 2. The measurement results such as the absorbance A, concentration C, and so on are, left in numerical form or data-processed such as for graphing, displayed on the display 27. Additionally, measurement results can continuously be obtained with the absorptiometer of the present embodiment, and thus it can be used for collecting data over time or tracking reaction by, for example, showing time on the horizontal axis and plotting the measurement results on the vertical axis.

Although in the above the photodiode 12 was used as the light detector, a phototransistor may replace the same. Where a phototransistor is used, the amplifier 13 (Fig. 2), which is required when a photodiode is used, becomes unnecessary, advantageously accomplishing a further reduction in the size and weight of the absorbance sensor device.

**(Absorbance measurement of copper sulfate)**

Measurements were actually conducted for copper sulfate solutions of known concentrations using the absorptiometer of the present embodiment, and the results will be described with a prepared calibration line.

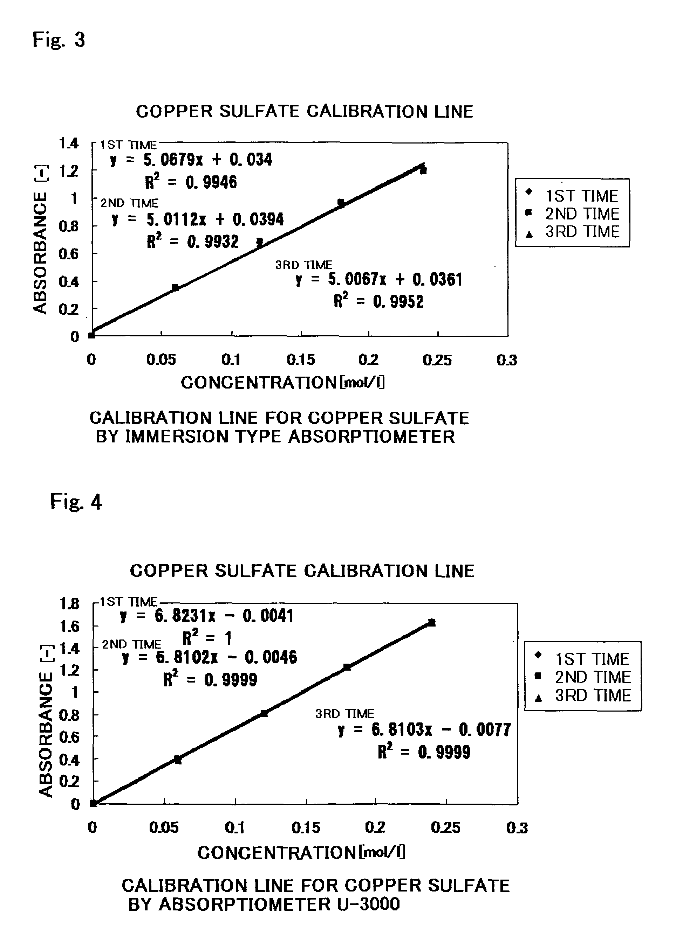

The copper sulfate solutions used for preparing the calibration line were prepared as follows. About 3.0 g of copper sulfate 5 hydrate was put into a 50 mL volumetric flask. To this volumetric flask, a small amount of ion-exchanged water was added, and 0.5 mL of 0.5 mol/L sulfuric acid was dropped, so as to prepare a 50 mL solution not exceeding the marked line (0.24 mol/L concentration copper sulfate aqueous solution). Taking this copper sulfate aqueous solution as a standard solution, 1/4, 2/4, 3/4, and 1 concentration solutions were prepared in 10 mL beakers. The absorbances of the thus prepared solutions were measured with the immersion type absorptiometer of the present invention, and the measured absorbances are shown in the form of a calibration line in Fig. 3. As earlier mentioned, the emission wavelength of the LED 11 is 700 nm, and the distance L between the light-emitting surface 11a and the light-receiving surface 12a of the photodiode 12 is 1 cm. Additionally, for purposes of comparison, a calibration line prepared using the same measurement liquids and a commercially available conventional absorptiometer (U-3000, Hitachi Seisakusho) is shown in Fig. 4.

Assuming that the absorption luminous intensity is y, the concentration of copper sulfate is x, and the correlation coefficient is r, with the absorptiometer of the present embodiment, a slope and correlation coefficient r as shown in Fig. 3 were obtained. The slope and correlation coefficient r in the case where the conventional absorptiometer was employed, are also shown in Fig. 4.

**(Absorbance measurement of chlorogenic acid)**

Measurements were actually conducted for chlorogenic acid solutions of known concentrations according to the Folin-Ciocalteu method using the absorptiometer of the present embodiment, and the results will be described with a prepared calibration line for chlorogenic acid. The Folin-Ciocalteu method is known as a method for measuring the amount of polyphenol.

The chlorogenic acid sample liquids used for preparing the calibration line were prepared as follows. With a solution of 100 mL of ion-exchanged water with 10 mg of chlorogenic acid dissolved therein taken as the standard solution, 1, 3/4, 2/4, and 1/4 concentration sample solutions were prepared. 4 mL of the chlorogenic acid solution of each concentration was respectively put into a 10 mL beaker, and 4 mL of a phenol reagent obtained by 2-fold dilution of a commercially available 2 normality phenol reagent was added thereto, followed by stirring with a stirrer for 3 minutes.

Thereafter, 4 mL of a 10wt% sodium carbonate aqueous solution was added, and the resultant solution was left at room temperature for 1 hour. In this case, it was stirred with a stirrer for the initial 5 minutes.

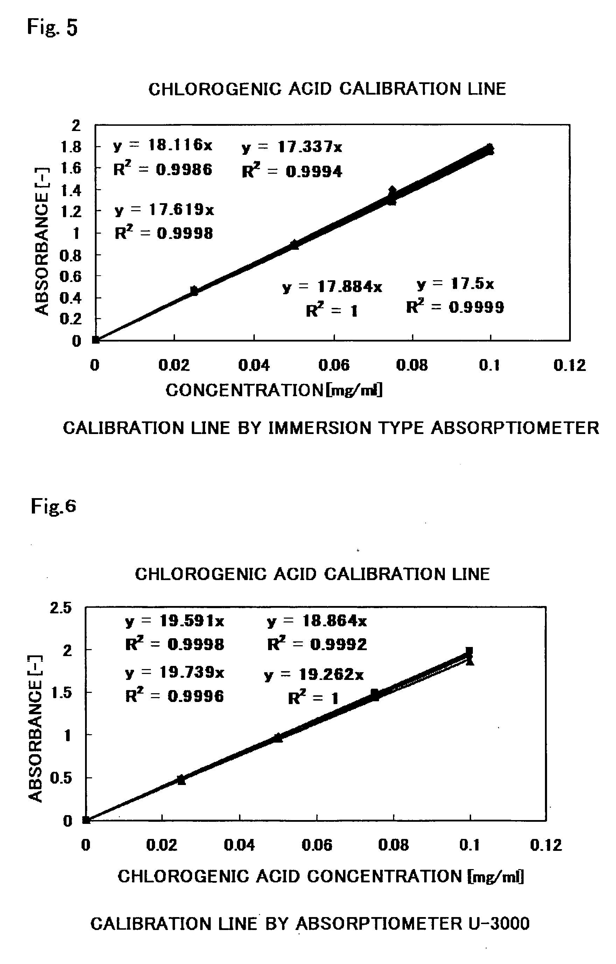

Measurements using the absorptiometer were conducted for the solutions prepared as above. In using the absorptiometer of the present invention, the measuring portion of the absorptiometer was placed into the 10 mL beaker and allowed to stand still for 3 minutes until the measurement value became stable. Measurements were made after the measurement value became stable. The results are shown in Fig. 5. As mentioned above, the emission wavelength of the LED 11 was 700 nm, and the distance L between the light-emitting surface 11a and the light-receiving surface 12a of the photodiode 12 was 1 cm. In addition, for purposes of comparison, a calibration line prepared using the same measurement liquids and the commercially available conventional absorptiometer (U-3000, Hitachi Seisakusho) is shown in Fig. 6. The length of the absorbance-measuring cell in this case was 1 cm, the same as the above distance L.

Assuming that the absorption luminous intensity is y, the concentration of chlorogenic acid is x, and the correlation coefficient is r, with the absorptiometer of the present embodiment, a slope and correlation coefficient r as shown in Fig. 5 were obtained. The slope and correlation coefficient r in the case where the conventional absorptiometer was employed, are also shown in Fig. 6.

It is known from the above that, since the slopes of the calibration lines obtained by the absorptiometer of the present embodiment and the conventional absorptiometer are almost identical, the same quantitative analysis as conventionally done is well within the capacity of the absorptiometer of the present embodiment. Furthermore, it is known from comparison of the correlation coefficients r that the absorptiometer of the present embodiment enables a more accurate measurement.

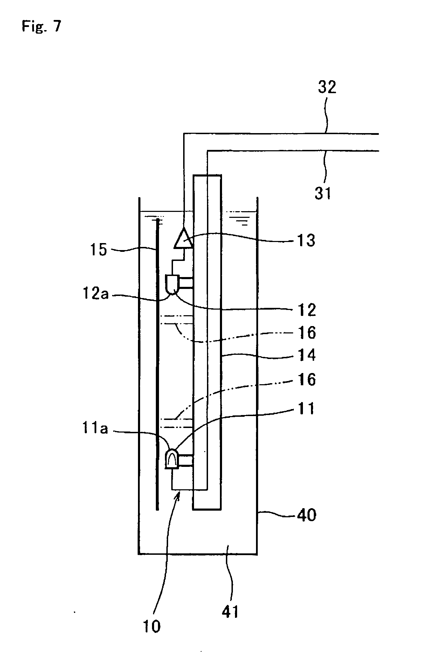

Fig. 7 is a schematic construction view of an absorbance sensor device 10 of an absorptiometer according to another embodiment of the present invention. This absorbance sensor device 10 is the one in which the housing 14 of the absorbance sensor device 10 in Fig. 1 is provided with a light-blocking unit 15, and like constituent elements in Fig. 6 corresponding to those in Fig. 1 are given like characters. The light-blocking unit 15 covers the LED 11 and the photodiode 12 and is fixed to the housing 14 by means of supports 16, 16 provided at positions not to hinder the measurement of absorbance. The light-blocking unit 15 in the present embodiment prevents disturbance light from entering the photodiode 12, while allowing the flow of liquid to be measured into the portion at the distance L between the light-emitting surface 11a of the LED 11 and the light-receiving surface 12a of the photodiode 12. In addition, where the light-blocking unit 15 exerts a great effect in preventing incidence of disturbance light, the same measurement of absorbance as conventionally done can very conveniently be performed without the need of the technique of a lock-in amplifier such as the oscillation circuit 21, phase shifter 24, and so on.

Please note that, although in Fig. 7 the light-blocking unit 15 is fixed to the housing 14 by means of the supports 16, 16, the whole of the housing 14 including the light-blocking unit 15 may be formed into a cylindrical shape which internally has the LED 11 and the photodiode 12 arranged in the longitudinal axis direction. In this case, the liquid to be measured is allowed to flow into the cylindrical housing through the upper and lower openings thereof.

Additionally, the incident light intensity $I_0$ was, in the above, determined with the absorbance sensor device 10 immersed in a blank liquid, but in the case of, for example, reaction tracking, the light intensity I at the stage where the absorbance sensor device 10 is initially immersed, may be made the light intensity $I_0$. Additionally, the light intensity I measured in advance in air or in transparent solvent not absorbent of measurement light, located in a dark place clear of disturbance light, may be made the light intensity $I_0$. Especially with the construction not using a lock-in amplifier, the conditions of measuring the light intensity $I_0$ and the light intensity I need to be made the same as much as possible.

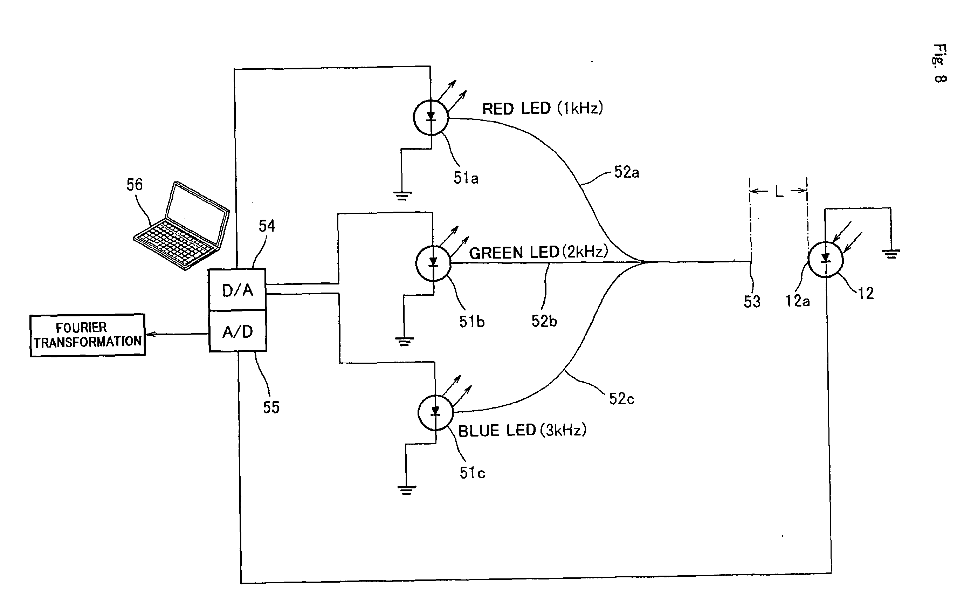

Fig. 8 is a conceptual view of an absorptiometer according to another embodiment of the present invention. The absorptiometer of the present embodiment includes three LEDs 51a, 51b, and 51c, each of the LEDs 51a, 51b, and 51c emitting measurement light of 700 nm, 565 nm, and 465 nm, respectively. Adjacent to each of the LEDs 51a, 51b, and 51c, respective optical fibers 52a, 52b, and 52c are disposed, so as to form a construction in which the measurement light from each LED is led to the related one of the optical fibers 52a, 52b, and 52c. The optical fibers 52a, 52b, and 52c are tied in a bundle and made even at their ends to provide a light-emitting surface 53. Thus, the measurement lights from the LEDs 51a, 51b, and 51c converge on the light-emitting surface 53, wherefrom they emit as a bundled light flux traveling in the same direction. Please note that this light-emitting surface 53 is fixed to a not-shown housing.

At a position in line with the light-emitting surface 53, a photodiode 12 is disposed which receives the measurement light from the light-emitting surface 53 and outputs a signal indicative of its intensity. The optical axis of the photodiode 12 is fixed relative to the housing (not shown) such that it coincides with the traveling direction of the measurement light from the light-emitting surface 53. Also in the present embodiment, the tip end portion of the photodiode 12 serves as the light-receiving surface 12a. In the present embodiment, the absorbance of a liquid to be measured is measured at the portion of distance L between the light-emitting surface 53 at the end of the optical fibers 52a, 52b, and 52c, and the light-receiving surface 12a of the photodiode 12.

Additionally, in the present embodiment, the LEDs 51a, 51b, and 51c are supplied with drive currents of analog signals into which digital signals of different frequencies taken out from a personal computer 56 have been converted by a D/A converter 54. Specifically, the LED 51a is supplied with a drive current of 1 kHz, the LED 51b with a drive current of 2 kHz, and the LED 51c with a drive current of 3 kHz. This allows simultaneous emitting of the red (700 nm) measurement light blinking at 1 kHz from the LED 51a, the green (565 nm) measurement light blinking at 2 kHz from the LED 51b, and the blue (465 nm) measurement light blinking at 3 kHz from the LED 51c, respectively.

These measurement lights in three colors, after emitted from the light-emitting surface 53 and subjected to light absorption by the liquid to be measured, reach the light-receiving surface 12a of the photodiode 12. Accordingly, the photodiode 12 measures at one time the red (700 nm) measurement light blinking at 1 kHz, the green (565 nm) measurement light blinking at 2 kHz, and the blue (465 nm) measurement light blinking at 3 kHz, and outputs a signal indicative of their intensities.

This signal, as shown in Fig. 8 , is input to an A/D converter 55 which converts the output from the photodiode 12 into a digital signal, which is then captured by the personal computer 56. Fourier transformation of the input digital signal is carried out in the personal computer 56. This allows the component of 1 kHz after Fourier transformation to be obtained as red (700 nm) light intensity, the component of 2 kHz as green (565 nm) light intensity, and the component of 3 kHz as blue (465 nm) light intensity, respectively. These light intensities and the light intensity obtained in advance for each frequency with blank liquid are used to determine the absorbances at these three frequencies.

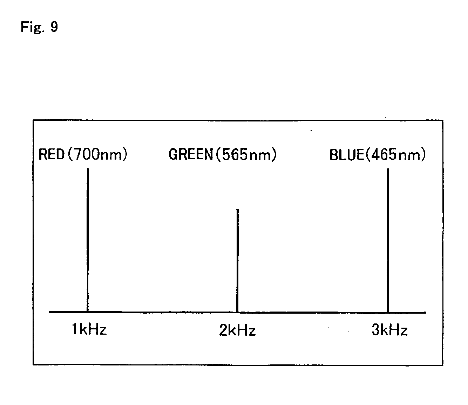

Fig. 9 represents an example of absorbance data for measurement light at each frequency obtained by the Fourier transformation. As shown in the figure, the absorbance of red light (700 nm), the absorbance of green light (565 nm), and the absorbance of blue light (465 nm) can be read at positions of 1 kHz, 2 kHz, and 3 kHz, respectively.

Please note that the case where three LEDs were employed was shown in the above, but the present invention is not limited thereto, and one, two, or 4 or more LEDs may be used.

Additionally, although simultaneous measurements of absorbances were conducted for the three measurement lights by Fourier transformation, a lock-in amplifier may individually be provided for the measurement light of each frequency, or a time division measurement may be conducted with one lock-in amplifier.

Furthermore, where measurements are made in a dark place, a time division measurement of absorbance may be conducted without using the Fourier transformation or lock-in amplifier.

Additionally, a personal computer was used in the above in connection with driving the LED and Fourier transformation, but a special purpose hardware may be used.

Additionally, instead of the photodiode used in the above as the light detector, a phototransistor may be used. Where a phototransistor is used, the amplifier 13 (Fig. 2) required when a photodiode is used becomes unnecessary, thereby accomplishing a further reduction in the size and weight of the absorbance sensor device.

Additionally, although a photodiode was used in the above as the light detector, the light detector may be constructed of a photodiode and an optical fiber such that the measurement light is, after transmitted through the liquid to be measured, lead through the optical fiber to the photodiode. In this case, the end of the optical fiber will be fixed at the position for the light-receiving surface 12a.

In the above, if the light source unit is constructed of an LED and an optical fiber, the LED may be located, not in the absorbance sensor device, but in the body unit. In addition, if the light detector is constructed of a photodiode and an optical fiber, the photodiode may also be located, not in the absorbance sensor device, but in the body unit.

**Industrial Applicability**

The use of an absorptiometer of the present invention enables measurements of absorbance by directly throwing it into a measurement target sample without using an absorbance-measuring cell, and thus it can be utilized not only in the field of conventional spectral equipment, but also in the field of sensors. Furthermore, the absorptiometer of the present invention is also utilizable in, for example, the field of plant control.

**Claims**

1. An absorbance sensor device which is used in a state where the device is immersed in a liquid to be measured, comprising:

   a housing;
   at least one light source unit having a light-emitting surface for emitting a measurement light including light of an absorption wavelength of the liquid to be measured, the light-emitting surface being fixed to the housing; and
   at least one light detector having a light-receiving surface fixed to the housing at a predetermined distance from the light-emitting surface of the light source unit, the light detector receiving by the light-receiving surface the measurement light that has passed through the liquid to be measured and outputting a signal indicative of its intensity.

2. The absorbance sensor device according to claim 1, wherein the light source unit comprises a light source of an LED, and the light-emitting surface is at a tip end portion of the LED.

3. The absorbance sensor device according to claim 1, wherein the light source unit comprises a light source of an LED and an optical fiber, and the light-emitting surface is at a tip end of the optical fiber.

4. The absorbance sensor device according to claim 1, comprising a plurality of light source units and one light detector, wherein
   the light source units have plural light sources respectively emitting measurement lights of different wavelengths, and optical fibers which allow the measurement lights from the plural light sources to converge on one light-emitting surface on the housing; and
   the light detector has a light-receiving surface fixed to the housing at a predetermined distance from the light-emitting surface, the light detector receiving by the light-receiving surface the measurement lights that have passed through the liquid to be measured and outputting a signal indicative of their intensities.

5. The absorbance sensor device according to claim 4, wherein the light sources are LEDs, and the light-emitting surface is at a tip end of the optical fibers.

6. The absorbance sensor device according to any one of claims 1 to 5, wherein the light detector comprises a photodiode or phototransistor which detects light of an absorption wavelength of the liquid to be measured, and the light-receiving surface is at a tip end portion of the photodiode.

7. The absorbance sensor device according to any one of claims 1 to 5, wherein the light detector comprises a photodiode or phototransistor which detects light of an absorption wavelength of the liquid to be measured and an optical fiber, and the light-receiving surface is at a tip end portion of the optical fiber.

8. The absorbance sensor device according to any one of claims 1 to 7, wherein a distance between the light-emitting surface and the light-receiving surface is changeable in accordance with absorbance of the liquid to be measured.

9. The absorbance sensor device according to any one of claims 1 to 8, wherein the light source unit is replaceable in accordance with the absorption wavelength of the liquid to be measured.

10. The absorbance sensor device according to claim 6 or 7, wherein the photodiode or phototransistor is replaceable in accordance with the absorption wavelength of the liquid to be measured.

11. The absorbance sensor device according to any one of claims 1 to 10, wherein the housing further includes a light-blocking unit which covers the light source unit and the light detector.

12. An absorptiometer comprising an absorbance sensor device of claim 1 or 2 and a body unit which performs signal processing on an output from the absorbance sensor device.

13. An absorptiometer comprising an absorbance sensor device of claim 3 and a body unit which performs signal processing on an output from the absorbance sensor device.

14. An absorptiometer comprising an absorbance sensor device of claim 4 or 5 and a body unit which performs signal processing on an output from the absorbance sensor device.

15. An absorptiometer comprising an absorbance sensor device of claim 7 and a body unit which performs signal processing on an output from the absorbance sensor device.

16. The absorptiometer according to claim 12 or 13, wherein the body unit further comprises a drive circuit which supplies to the light source unit a drive current including an alternating current component of a predetermined frequency and a phase detection circuit which extracts from an output signal of the light detector a frequency component in synchronization with the predetermined frequency and outputs the same, wherein absorbance of the liquid to be measured is determined based on an output of the phase detection circuit.

17. The absorptiometer according to claim 14, wherein the plural light source units are respectively supplied with drive currents including different frequency alternating current components, and an output signal of the light detector is Fourier transformed to simultaneously determine absorbance for each of the different wavelengths of the measurement lights from the plural light source units.

18. The absorptiometer according to claim 13, 14, or 17, wherein the light source is provided in the body unit.

19. The absorptiometer according to claim 15, wherein the photodiode or phototransistor is provided in the body unit.

Fig. 1

Fig. 2

Fig. 3

## COPPER SULFATE CALIBRATION LINE

1ST TIME
$y = 5.0679x + 0.034$
$R^2 = 0.9946$

2ND TIME
$y = 5.0112x + 0.0394$
$R^2 = 0.9932$

3RD TIME
$y = 5.0067x + 0.0361$
$R^2 = 0.9952$

ABSORBANCE [-]

CONCENTRATION [mol/l]

♦ 1ST TIME
■ 2ND TIME
▲ 3RD TIME

CALIBRATION LINE FOR COPPER SULFATE
BY IMMERSION TYPE ABSORPTIOMETER

Fig. 4

## COPPER SULFATE CALIBRATION LINE

1ST TIME
$y = 6.8231x - 0.0041$
$R^2 = 1$

2ND TIME
$y = 6.8102x - 0.0046$
$R^2 = 0.9999$

3RD TIME
$y = 6.8103x - 0.0077$
$R^2 = 0.9999$

ABSORBANCE [-]

CONCENTRATION [mol/l]

♦ 1ST TIME
■ 2ND TIME
▲ 3RD TIME

CALIBRATION LINE FOR COPPER SULFATE
BY ABSORPTIOMETER U-3000

Fig. 5

CHLOROGENIC ACID CALIBRATION LINE

y = 18.116x
R$^2$ = 0.9986

y = 17.337x
R$^2$ = 0.9994

y = 17.619x
R$^2$ = 0.9998

y = 17.884x
R$^2$ = 1

y = 17.5x
R$^2$ = 0.9999

ABSORBANCE [-]

CONCENTRATION [mg/ml]

CALIBRATION LINE BY IMMERSION TYPE ABSORPTIOMETER

Fig.6

CHLOROGENIC ACID CALIBRATION LINE

y = 19.591x
R$^2$ = 0.9998

y = 18.864x
R$^2$ = 0.9992

y = 19.739x
R$^2$ = 0.9996

y = 19.262x
R$^2$ = 1

ABSORBANCE [-]

CHLOROGENIC ACID CONCENTRATION [mg/ml]

CALIBRATION LINE BY ABSORPTIOMETER U-3000

Fig. 7

Fig. 8

Fig. 9

<table>
<tr><td colspan="2" align="center">**INTERNATIONAL SEARCH REPORT**</td><td>International application No.<br>PCT/JP2008/000262</td></tr>
</table>

| A. CLASSIFICATION OF SUBJECT MATTER |
| --- |
| *G01N21/27*(2006.01)i, *G01N21/01*(2006.01)i |
| According to International Patent Classification (IPC) or to both national classification and IPC |

| B. FIELDS SEARCHED |
| --- |
| Minimum documentation searched (classification system followed by classification symbols)<br>G01N21/00-21/61 |
| Documentation searched other than minimum documentation to the extent that such documents are included in the fields searched<br>Jitsuyo Shinan Koho        1922-1996   Jitsuyo Shinan Toroku Koho   1996-2008<br>Kokai Jitsuyo Shinan Koho    1971-2008   Toroku Jitsuyo Shinan Koho    1994-2008 |
| Electronic data base consulted during the international search (name of data base and, where practicable, search terms used) |

**C. DOCUMENTS CONSIDERED TO BE RELEVANT**

| Category* | Citation of document, with indication, where appropriate, of the relevant passages | Relevant to claim No. |
| --- | --- | --- |
| X | JP 2004-309451 A  (The Furukawa Electric Co., Ltd.),<br>04 November, 2004 (04.11.04),<br>Par. Nos. [0001], [0043] to [0050], [0073] to [0080]; Figs. 4, 5, 19 to 23<br>(Family: none) | 1,2 |
| X | JP 2001-356609 A  (Fuji Photo Film Co., Ltd.),<br>26 December, 2001 (26.12.01),<br>Par. Nos. [0044] to [0088]; Figs. 1 to 5<br>(Family: none) | 1,2 |
| A | JP 6-281575 A  (Shimadzu Corp.),<br>07 October, 1994 (07.10.94),<br>Full text; all drawings<br>(Family: none) | 1,2 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 May, 2008 (09.05.08) | Date of mailing of the international search report<br>20 May, 2008 (20.05.08) |
| --- | --- |
| Name and mailing address of the ISA/<br>    Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/000262

C (Continuation).    DOCUMENTS CONSIDERED TO BE RELEVANT

| Category* | Citation of document, with indication, where appropriate, of the relevant passages | Relevant to claim No. |
|---|---|---|
| A | JP 5-203561 A  (Texaco Development Corp.),<br>10 August, 1993 (10.08.93),<br>Full text; all drawings<br>& US 5418614 A          & CA 2078493 A1<br>& CN 1074292 A | 1,2 |
| A | JP 1-501247 A  (Hughes Aircraft Co.),<br>27 April, 1989 (27.04.89),<br>Full text; all drawings<br>& US 4668277 A          & US 4689417 A | 1,2 |

Form PCT/ISA/210 (continuation of second sheet) (April 2007)

## INTERNATIONAL SEARCH REPORT

| International application No. |
|---|
| PCT/JP2008/000262 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

  See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1 and 2.

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| INTERNATIONAL SEARCH REPORT | International application No. |
|---|---|
| | PCT/JP2008/000262 |

**Continuation of Box No.III of continuation of first sheet(2)**

Document 1: JP 2004-309451A (The Furukawa Electric Co., Ltd.), 4 November, 2004 (04.11.04), paragraphs 0001, 0043-0050, 0073-0080, Figs. 4, 5, and 19-23.

The document 1 describes a density measurement device of density of a lead storage battery, provided with a light emitting diode with a 970nm wavelength at the central of a light emitting range, a light receiving diode with a light receiving range of 900-1050nm wavelengths, and a connecting unit fixed to keep a constant gap between the light emitting diode and the light receiving diode, wherein the density measurement device is set in an electrolytic solution in a cell to measure density of a lead storage battery by making use of a spectroscopic absorption characteristic of water at 940-1030nm wavelengths.

Thus, there is no difference in the matter to specify an invention between the invention described in the document 1 and that in claim 1.

Therefore, the subject described in the invention in claim 1 has been already solved, and it has no special technical feature.

In conclusion, special technical features in claims 2-19 are described as follows. Since these inventions are not so technically inked as to involve one or more of the same or corresponding special technical features, no relation deemed to form a single general inventive concept can be found.

The special technical feature of the invention in claim 2 is a light source comprised of an LED light source unit, wherein the light emitting surface is the pointed end of the LED.

The special technical feature of the inventions in claims 3, 13 and 18 is a light source comprised of an LED light source unit and an optical fiber, wherein the light emitting surface is the pointed end of the optical fiber.

The special technical feature of the inventions in claims 4, 5, 14 and 17 is provided with a plurality of light source units and one of the optical detectors, wherein each light source unit is comprised of a plurality of light sources to emit different wavelength measuring light and an optical fiber to converge the measuring light from a plurality of the light sources at one light emitting surface on the housing.

The special technical feature of the invention in claim 6 is that an optical detector is a photodiode or a photo transistor to detect light with an absorption wavelength of a measuring subject solution, wherein the light receiving surface is the pointed end of the photodiode.

The special technical feature of the inventions in claims 7, 15 and 19 is that an optical detector is provided with a photodiode or a photo transistor to detect light with an absorption wavelength of a measuring subject solution and an optical fiber, wherein the light receiving surface is the pointed end of the optical fiber.

(To be continued on the next page)

Form PCT/ISA/210 (extra sheet) (April 2007)

**INTERNATIONAL SEARCH REPORT**

| International application No. |
| --- |
| PCT/JP2008/000262 |

The special technical feature of the invention in claim 8 is that a distance between a light emitting surface and a light receiving surface is variable in accordance with absorbance of a measuring subject solution.

The special technical feature of the invention in claim 9 is that a light surface is replaceable in accordance with absorbance of a measuring subject solution.

The special technical feature of the invention in claim 10 is that a photodiode or a photo transistor is replaceable in accordance with absorbance of a measuring subject solution.

The special technical feature of the invention in claim 11 is that a housing is further provided with a light shielding unit to cover a light source unit and an optical detector.

The special technical feature of the inventions in claims 12 and 16 is that an absorbance meter is further provided with a main body unit to carry out signal processing of an output from an absorbance sensor element.

Form PCT/ISA/210 (extra sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9264845 B
- JP H9264846 B
- JP H9264847 B

- JP H1137929 B
- JP H1137930 B
- JP H1137931 B

**Non-patent literature cited in the description**

- *BUNSEKI KAGAKU,* 2005, vol. 54 (4), 291-295